# EUROPEAN PATENT APPLICATION

(11) **EP 4 567 175 A1**
(43) Date of publication of application: **11.06.2025**
(21) Application number: 22962864.9
(22) Date of filing: 23.11.2022
(51) Int. Cl.: D04H 3/011, D04H 3/016, D01D 5/253, D01D 5/34, D01F 8/14

(54) **COMPOSITION FOR BIODEGRADABLE MELTBLOWN NONWOVEN FABRIC, AND BIODEGRADABLE MELTBLOWN NONWOVEN FABRIC MANUFACTURED USING SAME**

(30) Priority: 20.10.2022 KR 20220135996
(71) Applicant: CJ CheilJedang Corporation, Seoul 04560 (KR)
(72) Inventor: SONG, Bo-Seok, Seoul 04560 (KR); SIM, Eun Jung, Seoul 04560 (KR); YOON, Ki Chull, Seoul 04560 (KR); JUNG, Minho, Seoul 04560 (KR)
(74) Representative: Meissner Bolte Partnerschaft mbB
(86) International application number: PCT/KR2022/018639
(87) International publication number: WO 2024/085302

(57) **Abstract**

The present invention relates to a composition for a biodegradable meltblown nonwoven fabric, and a biodegradable meltblown nonwoven fabric manufactured using same. Specifically, according to one embodiment of the present invention, the composition for biodegradable meltblown nonwoven fabric comprises a polyhydroxyalkanoate (Pha) resin including a 4-hydroxybutyrate (4-HB) repeating unit, and satisfies a melt flow index (MFI) of at least 30 g/10 min, as measured at 210°C and under 2.16 kg according to ASTM D1238, and is thus environmentally friendly, having excellent biodegradability and biocompatibility, and can enhance properties such as filtration, breathability, and flexibility, as well as diameter uniformity and the like of fibers manufactured under high-temperature and high-pressure conditions, such as by a meltblown process.

## Description

### Technical Field

The present invention relates to a composition for a biodegradable melt-blown nonwoven fabric and to a melt-blown nonwoven fabric prepared therefrom.

### Background Art

In recent years, as concerns about environmental problems increase, research on the treatment and recycling of various household wastes is being actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties such as flexibility and strength, productivity, and processability, and increasing the lifespan of products themselves, thereby reducing the amount of waste or enhancing their recyclability.

Polyhydroxyalkanoates (PHA) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, nonwoven fabrics are an industrial fiber material used in various fields, for example, for controlling suspended matter such as fine particles or gases in the air or as a key material in the filtration process to control the purity of water used in industrial sites such as food processing. In particular, Since the 2,000s, interest in harmfulness to the human body due to yellow dust, fine dust, and ultrafine dust has increased, and interest in nonwoven fabrics used as filtering materials has increased due to the new coronavirus in 2019; thus, research thereon is being actively conducted.

Conventionally, petrochemical-based polymer materials have been used as materials for nonwoven fabrics. However, since it is difficult to collect or recycle petrochemical-based polymer materials after their use, they are left unattended in the soil or the ocean, thereby seriously polluting the environment. Although biodegradable polymers capable of enhancing biodegradability are being applied, their raw materials are expensive, or there is a limit to enhancing the filterability, air permeability, flexibility, and the like required for nonwoven fabrics.

In addition, nonwoven fabrics are mainly manufactured by the melt-blown process or the spun-bonding process. Melt-blown nonwoven fabrics, as compared with spun-bonded nonwoven fabrics, can be manufactured using ultrafine fibers, whereby they have excellent flexibility and are readily laminated with other nonwoven fabrics, whereas the diameter of fibers produced is poor in uniformity since polymers are melt-spun under high-temperature and high-pressure conditions. Accordingly, it is required to develop a biodegradable nonwoven fabric that is environmentally friendly by virtue of its excellent biodegradability and biocompatibility, along with characteristics such as filterability, air permeability, flexibility, and the like, and has excellent uniformity in the diameter of fibers produced under high-temperature and high-pressure conditions such as a melt-blown process.

### [Prior Art Document]

### [Patent Document]

(Patent Document 1) Korean Laid-open Patent Publication No. 2012-0103158

### Disclosure of Invention

### Technical Problem

Accordingly, the present invention aims to provide a biodegradable nonwoven fabric that is environmentally friendly by virtue of its excellent biodegradability and biocompatibility, along with characteristics such as filterability, air permeability, flexibility, and the like, and has excellent uniformity in the diameter of fibers produced under high-temperature and high-pressure conditions such as a melt-blown process.

### Solution to Problem

The composition for a biodegradable melt-blown nonwoven fabric according to an embodiment of the present invention comprises a polyhydroxyalkanoate (PHA) resin comprising a 4-hydroxybutyrate (4-HB) repeat unit, wherein the melt flow index (MFI) measured at 210°C and 2.16 kg according to ASTM D1238 is 30 g/10 minutes or more.

According to an embodiment of the present invention, the PHA resin may comprise the 4-hydroxybutyrate (4-HB) repeat unit in an amount of 0.1% by weight to 60% by weight.

According to an embodiment of the present invention, the PHA resin may comprise a first PHA resin.

According to an embodiment of the present invention, the first PHA resin may comprise a 4-hydroxybutyrate (4-HB) repeat unit in an amount of 15% by weight to 60% by weight and have a melt flow index (MFI) of 0.1 g/10 minutes to 20 g/10 minutes when measured at 165°C and 5 kg according to ASTM D1238.

According to an embodiment of the present invention, the PHA resin may comprise a second PHA resin.

According to an embodiment of the present invention, the second PHA resin may comprise a 4-hydroxybutyrate (4-HB) repeat unit in an amount of 0.1% by weight to 30% by weight and have a melt flow index of 0.1 g/10 minutes to 15 g/10 minutes when measured at 165°C and 5 kg according to ASTM D1238.

According to an embodiment of the present invention, the composition for a biodegradable melt-blown nonwoven fabric may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

According to an embodiment of the present invention, the weight ratio of the PHA resin to the biodegradable resin may be 1:99 to 99:1.

According to an embodiment of the present invention, the weight ratio of the PHA resin to the polylactic acid resin may be 20:80 to 70:30.

According to an embodiment of the present invention, the composition for a biodegradable melt-blown nonwoven fabric may further comprise at least one additive selected from the group consisting of pigments, dye absorbers, light absorbers, antioxidants, compatibilizers, weighting agents, nucleating agents, melt strength agents, slip agents, and fluidizing agent.

According to an embodiment of the present invention, the PHA resin may further comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

According to an embodiment of the present invention, the composition for a biodegradable melt-blown nonwoven fabric may have a melt flow index of 10 g/10 minutes to 30 g/10 minutes when measured at 190°C and 2.16 kg according to ASTM D1238 and a weight average molecular weight of 500,000 g/mole or less.

The biodegradable melt-blown nonwoven fabric according to another embodiment of the present invention comprises biodegradable fibers, wherein the biodegradable fibers comprise a polyhydroxyalkanoate (PHA) resin comprising a 4-hydroxybutyrate (4-HB) repeat unit, and the biodegradable fibers have an average diameter of 10 µm or less and a standard deviation of the average diameter of 1.3 or less.

According to another embodiment of the present invention, the biodegradable melt-blown nonwoven fabric may have a filter efficiency at 0.3 µm of 8% or more and a filter efficiency at 0.5 µm of 10% or more, according to KS K ISO 9073-152007, a total thickness of 0.05 mm to 20 mm, and a basis weight of 10 gsm to 500 gsm.

According to another embodiment of the present invention, the biodegradable melt-blown nonwoven fabric may have a warp strength of 3 N or more and a warp elongation of 6% or more, based on a basis weight of 30 gsm, according to K ISO 9073-3:1989.

According to another embodiment of the present invention, the biodegradable fiber may be a composite fiber of a heterogeneous cross-section or a composite fiber of two or more or three or more components.

According to another embodiment of the present invention, the biodegradable melt-blown nonwoven fabric may further comprise a functional coating layer on at least one side thereof.

The process for preparing a biodegradable melt-blown nonwoven fabric according to still another embodiment of the present invention comprises melt-extruding a composition for a biodegradable melt-blown nonwoven fabric or pellets prepared therefrom, followed by spinning thereof, wherein the composition for a biodegradable melt-blown nonwoven fabric comprises a polyhydroxyalkanoate (PHA) resin comprising a 4-hydroxybutyrate (4-HB) repeat unit, and the melt flow index (MFI) measured at 210°C and 2.16 kg according to ASTM D1238 is 30 g/10 minutes or more.

According to still another embodiment of the present invention, the melt-extrusion temperature may be 150°C to 230°C.

According to still another embodiment of the present invention, the spinning step may be carried out such that the basis weight of the biodegradable melt-blown nonwoven fabric thus prepared is adjusted to 10 gsm to 500 gsm.

According to still another embodiment of the present invention, the step of spinning a composition for a biodegradable melt-blown nonwoven fabric may be carried out using a sheath-core composite spinning apparatus.

According to still another embodiment of the present invention, the weight ratio of raw materials to be fed to the core part and the sheath part may be 5:95 to 95:5.

According to still another embodiment of the present invention, the composition for a biodegradable melt-blown nonwoven fabric may be fed to the core part.

### Advantageous Effects of Invention

The composition for a biodegradable melt-blown nonwoven fabric according to an embodiment of the present invention comprises a polyhydroxyalkanoate (PHA) resin comprising a 4-hydroxybutyrate (4-HB) repeat unit, wherein the melt flow index (MFI) measured at 210°C and 2.16 kg according to ASTM D1238 is controlled to 30 g/10 minutes or more. Thus, it is environmentally friendly by virtue of its excellent biodegradability and biocompatibility, along with characteristics such as filterability, air permeability, flexibility, and the like, and it is possible to enhance the uniformity in the diameter of fibers produced under high-temperature and high-pressure conditions such as a melt-blown process.

Further, not only can a biodegradable melt-blown nonwoven fabric be prepared directly from the composition for a biodegradable melt-blown nonwoven fabric, but also a biodegradable melt-blown nonwoven fabric can be prepared using biodegradable pellets obtained from the composition for a biodegradable melt-blown nonwoven fabric, which provides convenient options for selecting a process as needed.

In addition, since the composition for a biodegradable melt-blown nonwoven fabric and the biodegradable melt-blown nonwoven fabric prepared therefrom are biodegradable in both soil and sea, along with excellent thermal properties and mechanical properties, they can be advantageously applied to more diverse fields to exhibit excellent characteristics.

### Brief Description of Drawing

Fig. 1 is a scanning electron microscope (SEM, 100 magnification) image of the biodegradable melt-blown nonwoven fabric of Example 14.
Fig. 2 is a scanning electron microscope (SEM, 1,000 magnification) image of the biodegradable melt-blown nonwoven fabric of Example 14.

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

### Composition for a biodegradable melt-blown nonwoven fabric

The composition for a biodegradable melt-blown nonwoven fabric according to an embodiment of the present invention comprises a polyhydroxyalkanoate (PHA) resin comprising a 4-hydroxybutyrate (4-HB) repeat unit, wherein the melt flow index (MFI) measured at 210°C and 2.16 kg according to ASTM D1238 is 30 g/10 minutes or more.

Nonwoven fabrics are a fiber aggregate or film bonded to each other using physical or chemical means, not by spinning, weaving, or knitting. It is directly manufactured in the form of a fabric by using the fusing force of the fibers themselves or the entanglement of the fibers. Conventionally, nonwoven fabrics are manufactured using petrochemical-based materials such as polypropylene (PP), but their biodegradability is low. Therefore, a method of using polylactic acid (PLA) as a material for nonwoven fabrics has been proposed. However, the degree of improvement in biodegradability is not large. Due to its low flexibility, it is rough and stiff to the touch, making it difficult to be applied to various fields due to poor usability or wearing comfort.

In addition, nonwoven fabrics are mainly manufactured by the melt-blown process or the spun-bonding process. Melt-blown nonwoven fabrics, as compared with spun-bonded nonwoven fabrics, can be manufactured using ultrafine fibers, whereby they have excellent flexibility and are readily laminated with other nonwoven fabrics, whereas the diameter of fibers produced is poor in uniformity since polymers are melt-spun under high-temperature and high-pressure conditions.

However, the composition for a biodegradable melt-blown nonwoven fabric according to an embodiment of the present invention comprises a polyhydroxyalkanoate (PHA) resin comprising a 4-hydroxybutyrate (4-HB) repeat unit, wherein the melt flow index (MFI) measured at 210°C and 2.16 kg according to ASTM D1238 is controlled to 30 g/10 minutes or more. Thus, it is environmentally friendly by virtue of its excellent biodegradability and biocompatibility, along with characteristics such as filterability, air permeability, flexibility, and the like, and it is possible to enhance the uniformity in the diameter of fibers produced under high-temperature and high-pressure conditions such as a melt-blown process.

The composition for a biodegradable melt-blown nonwoven fabric according to an embodiment of the present invention comprises a polyhydroxyalkanoate resin comprising a 4-hydroxybutyrate (4-HB) repeat unit.

Specifically, the composition for a biodegradable melt-blown nonwoven fabric according to an embodiment of the present invention comprises a polyhydroxyalkanoate (PHA) resin, which is a copolymerized polyhydroxyalkanoate resin comprising a 4-hydroxybutyrate (4-HB) repeat unit, specifically, a specific first PHA resin and/or a specific second PHA resin having a 4-HB repeat unit, whereby it is environmentally friendly by virtue of excellent biodegradability and biocompatibility, and it is possible to readily prepare a biodegradable melt-blown nonwoven fabric having excellent characteristics.

In addition, since the composition for a biodegradable melt-blown nonwoven fabric and the biodegradable melt-blown nonwoven fabric prepared therefrom are biodegradable in both soil and sea, along with excellent thermal properties and mechanical properties, they can be advantageously applied to more diverse fields to exhibit excellent characteristics.

PHA is a natural thermoplastic polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the composition for a biodegradable melt-blown nonwoven fabric and the biodegradable melt-blown nonwoven fabric prepared using the same comprise a PHA resin, it may have environmentally friendly characteristics. Thus, the composition for a biodegradable melt-blown nonwoven fabric and the biodegradable melt-blown nonwoven fabric prepared using the same have a great advantage in that they can be used in various fields since they are biodegradable and environmentally friendly.

Specifically, PHA is a natural thermoplastic polyester polymer that accumulates in microbial cells. It is formed by accumulating PHA in cells to store carbon and energy when certain bacteria are supplied with nutrients (nitrogen source, phosphorus, and the like) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHAs can be prepared depending on the types of monomers. Hundreds of different types of PHAs depending on the types of monomers have completely different structures and properties.

A PHA resin may be composed of a single monomer repeat unit in living cells and may be formed by polymerizing one or more monomer repeat units. Specifically, the PHA resin may be a homo-polyhydroxyalkanoate resin (hereinafter, referred to as HOMO PHA resin) or a copolymerized polyhydroxyalkanoate resin (hereinafter, referred to as a copolymerized PHA resin), that is, a copolymer in which different repeat units are randomly distributed in the polymer chain.

Examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may contain one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

That is, the PHA resin may be a HOMO PHA resin composed of a 4-HB repeat unit alone or a copolymerized PHA resin comprising a 4-HB repeat unit.

In addition, the PHA resin may be a copolymerized PHA resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB).

In addition, the PHA resin may comprise isomers. For example, the PHA resin may comprise structural isomers, enantiomers, or geometric isomers. Specifically, the PHA resin may comprise structural isomers.

In addition, the PHA resin may be a copolymerized PHA resin with controlled crystallinity. For example, the PHA resin may comprise at least one or more of a 4-HB repeat unit, and the content of the 4-HB repeat unit may be controlled to adjust the crystallinity of the PHA resin.

For example, the PHA resin may be a copolymerized PHA resin that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the copolymerized PHA resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may comprise a 4-HB repeat unit and a 3-HB repeat unit.

More specifically, the PHA resin may comprise a 4-HB repeat unit in an amount of 0.1% by weight to 60% by weight. For example, the PHA resin may be a copolymerized PHA resin comprising a 4-HB repeat unit and a 3-HB repeat unit and may comprise the 4-HB repeat unit in an amount of 0.1% by weight to 60% by weight.

The PHA resin may comprise the 4-HB repeat unit in an amount of 0.5% by weight to 50% by weight, 1% by weight to 45% by weight, 5% by weight to 45% by weight, 8% by weight to 40% by weight, 10% by weight to 38% by weight, 15% by weight to 35% by weight, or 20% by weight to 30% by weight.

In addition, the PHA resin may be a copolymerized PHA resin comprising a 4-HB repeat unit and a 3-HB repeat unit and may comprise the 3-HB repeat unit in an amount of 20% by weight or more. For example, the PHA resin may comprise the 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

The PHA resin whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present invention, the PHA resin may comprise two or more types of PHA resins having different crystallinities. Specifically, the PHA resin may be prepared by mixing two or more types of PHA resins having different crystallinities to have the content of a 4-HB repeat unit in the specific range.

Specifically, the PHA resin may comprise a first PHA, which is an amorphous PHA resin with controlled crystallinity.

As an amorphous PHA resin (hereinafter, referred to as aPHA resin) with controlled crystallinity, the first PHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be -45°C to -10°C, -35°C to -15°C, -35°C to -20°C, or -30°C to -20°C. In addition, the crystallization temperature (Tc) of the first PHA resin may not be measured or may be 60°C to 120°C, 60°C to 110°C, 70°C to 120°C, or 75°C to 115°C. The melting temperature (Tm) of the first PHA resin may not be measured or may be 100°C to 170°C, 100°C to 160°C, 110°C to 160°C, or 120°C to 150°C.

In the present specification, the glass transition temperature (Tg), crystallization temperature (Tc), and melting temperature (Tm) may be measured using a differential scanning calorimeter (DSC). Specifically, the glass transition temperature (Tg), crystallization temperature (Tc), and melting temperature (Tm) may be measured by conducting a first scan or a second scan in a differential scanning calorimetry (DSC) mode, and they can be confirmed from a heat flow curve obtained by these scans. More specifically, the glass transition temperature (Tg), crystallization temperature (Tc), and melting temperature (Tm) may be confirmed from a heat flow curve obtained by raising the temperature from 40°C to 180°C at a rate of 10°C/minute and then cooling it to -50°C at a rate of 10°C/minute.

The first PHA resin may have a melt flow index (MFI) of 0.1 g/10 minutes to 20 g/10 minutes measured at 165°C and 5 kg according to ASTM D1238. For example, the melt flow index (MFI) of the first PHA resin measured at 165°C and 5 kg according to ASTM D1238 may be 0.1 g/10 minutes to 15 g/10 minutes, 0.1 g/10 minutes to 12 g/10 minutes, 0.1 g/10 minutes to 10 g/10 minutes, 0.1 g/10 minutes to 8 g/10 minutes, 0.1 g/10 minutes to 6 g/10 minutes, 0.1 g/10 minutes to 5.5 g/10 minutes, 0.5 g/10 minutes to 10 g/10 minutes, 1 g/10 minutes to 10 g/10 minutes, 2 g/10 minutes to 8 g/10 minutes, 3 g/10 minutes to 6 g/10 minutes, or 3 g/10 minutes to 5.5 g/10 minutes.

The first PHA resin may have a weight average molecular weight of 10,000 g/mole to 1,200,000 g/mole, 10,000 g/mole to 1,000,000 g/mole, 50,000 g/mole to 1,000,000 g/mole, 200,000 g/mole to 1,200,000 g/mole, 250,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 500,000 g/mole.

In addition, the PHA resin may comprise a second PHA resin that is a semi-crystalline PHA resin.

As a semi-crystalline PHA resin (hereinafter, referred to as scPHA resin) with controlled crystallinity, the second PHA resin may comprise a 4-HB repeat unit in an amount of 0.1% by weight to 30% by weight. For example, the second PHA resin may comprise the 4-HB repeat unit in an amount of 0.1% by weight to 30% by weight, 0.5% by weight to 30% by weight, 1% by weight to 29% by weight, 3% by weight to 29% by weight, 1% by weight to 28% by weight, 1.5% by weight to 25% by weight, 2% by weight to 20% by weight, 2.5% by weight to 15% by weight, 3% by weight to 25% by weight, 5% by weight to 21% by weight, 6% by weight to 18% by weight, 10% by weight to 30% by weight, 10% by weight to 20% by weight, 13% by weight to 23% by weight, or 15% by weight to 20% by weight.

The glass transition temperature (Tg) of the second PHA resin may be -30°C to 80°C, -30°C to 10°C, -25°C to 5°C, -25°C to 0°C, -20°C to 0°C, or -15°C to 0°C. The crystallization temperature (Tc) of the second PHA resin may be 70°C to 120°C, 75°C to 120°C, or 75°C to 115°C. The melting temperature (Tm) of the second PHA resin may be 105°C to 165°C, 110°C to 160°C, 115°C to 155°C, or 120°C to 150°C.

In addition, the second PHA resin may have a melt flow index of 0.1 g/10 minutes to 15 g/10 minutes measured at 165°C and 5 kg according to ASTM D1238. For example, the melt flow index (MFI) of the second PHA resin measured at 165°C and 5 kg according to ASTM D1238 may be 0.1 g/10 minutes to 10 g/10 minutes, 0.2 g/10 minutes to 7 g/10 minutes, 0.5 g/10 minutes to 5.5 g/10 minutes, 0.6 g/10 minutes to 5 g/10 minutes, 0.8 g/10 minutes to 5 g/10 minutes, 1 g/10 minutes to 5 g/10 minutes, 0.1 g/10 minutes to 5 g/10 minutes, 1 g/10 minutes to 6.5 g/10 minutes, 1.5 g/10 minutes to 15 g/10 minutes, 3 g/10 minutes to 10 g/10 minutes, 3.5 g/10 minutes to 12 g/10 minutes, or 4.5 g/10 minutes to 10 g/10 minutes.

The second PHA resin may have a weight average molecular weight of 10,000 g/mole to 1,200,000 g/mole, 50,000 g/mole to 1,100,000 g/mole, 50,000 g/mole to 350,000 g/mole, 100,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 500,000 g/mole, or 500,000 g/mole to 1,200,000 g/mole.

The first PHA resin and the second PHA resin may be distinguished in terms of the content of a 4-HB repeat unit and may have at least one characteristic selected from the group consisting of glass transition temperature (Tg), crystallization temperature (Tc), melting temperature (Tm), and melt flow index. Specifically, the first PHA resin and the second PHA resin may be distinguished in terms of the content of a 4-HB repeat unit, glass transition temperature (Tg), crystallization temperature (Tg), melting temperature (Tm), melt flow index, and the like. For example, the content of a 4-HB repeat unit of the first PHA resin and the content of a 4-HB repeat unit of the second PHA resin may be different from each other.

According to an embodiment of the present invention, the PHA resin may comprise the first PHA resin or the second PHA resin, or it may comprise both the first PHA resin and the second PHA resin.

Specifically, as the PHA resin comprises the first PHA resin, which is an amorphous PHA resin, or both the first PHA resin, which is an amorphous PHA resin, and the second PHA resin, which is a semi-crystalline PHA resin, more specifically, as the contents of the first PHA resin and the second PHA resin are adjusted, it is possible to more effectively control the desired physical properties.

According to an embodiment of the present invention, the PHA resin may comprise the first PHA resin or the second PHA resin. Specifically, the PHA resin may be composed of only the first PHA resin or only the second PHA resin.

According to another embodiment of the present invention, the PHA resin may comprise the first PHA resin and the second PHA resin. In such an event, the weight ratio of the first PHA resin to the second PHA resin may be 1:0.5 to 5. For example, the weight ratio of the first PHA resin to the second PHA resin may be 1:0.5 to 4.5, 1:0.6 to 4.2, or 1:0.7 to 3.5. As the weight ratio of the first PHA resin to the second PHA resin satisfies the above range, it is possible to more effectively control the desired physical properties.

In addition, the glass transition temperature (Tg) of the PHA resin may be -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

In addition, the crystallization temperature (Tc) of the PHA resin may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA resin may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

The PHA resin may have a decomposition temperature (Td, weight loss of 5%) of 220°C to 280°C, 245°C to 275°C, 255°C to 270°C, or 260°C to 270°C, as measured by a thermogravimetric analyzer (TGA).

In the present specification, the decomposition temperature (Td) may be measured using a thermogravimetric analyzer (TGA). Specifically, the decomposition temperature (Td) may be confirmed as a temperature at which the weight of the PHA resin is reduced by 5% from a weight change curve obtained by raising the temperature from room temperature to 600°C at a rate of 10°C/minute using a thermogravimetric analyzer (TGA).

In addition, the PHA resin may have a weight average molecular weight of 10,000 g/mole to 1,200,000 g/mole. For example, the weight average molecular weight of the PHA resin may be 50,000 g/mole to 1,200,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 950,000 g/mole, 100,000 g/mole to 900,000 g/mole, 200,000 g/mole to 800,000 g/mole, 250,000 g/mole to 650,000 g/mole, 200,000 g/mole to 400,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, 600,000 g/mole to 900,000 g/mole, or 500,000 g/mole to 900,000 g/mole.

The PHA resin may have a crystallinity of 90% or less as measured by a differential scanning calorimeter (DSC). For example, the crystallinity of the PHA resin may be measured by differential scanning calorimetry and may be 90% or less, 85% or less, 80% or less, 75% or less, or 70% or less.

In addition, the PHA resin may have an average particle size of 0.5 µm to 5 µm. For example, the average particle size of the PHA resin may be 0.7 µm to 4.6 µm, 1.1 µm to 4.5 µm, 1.5 µm to 4.3 µm, 2.2 µm to 4.2 µm, 2.6 µm to 4.0 µm, 2.8 µm to 3.9 µm, or 3.1 µm to 3.8 µm.

The average particle size of the PHA resin may be measured with a nano particle size analyzer (e.g., Zetasizer Nano ZS). Specifically, the PHA is subjected to measurement of average particle size through dynamic light scattering (DLS) at a temperature of 25°C and a measurement angle of 175° using Zetasizer Nano ZS (manufacturer: Marven). In such an event, the value of the peak derived through the polydispersity index (PDI) in the confidence interval of 0.5 is taken as the particle size.

The PHA resin may have a polydispersity index (PDI) of less than 2.5. For example, the polydispersity index of the PHA resin may be 2.4 or less, 2.3 or less, 2.1 or less, or 2.0 or less.

In addition, the PHA resin may be obtained by cell disruption using a non-mechanical method or a chemical method. Specifically, since the PHA resin is a natural thermoplastic polyester polymer that accumulates in microbial cells and has a relatively large average particle size, it may be obtained through a disruption process in order to more effectively control the yield or physical properties of the desired material and enhance the process efficiency.

Meanwhile, according to still another embodiment of the present invention, the composition for a biodegradable melt-blown nonwoven fabric may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

As the biodegradable resin is employed together with the PHA resin, the composition for a biodegradable melt-blown nonwoven fabric has excellent dispersibility, and filter efficiency, along with filterability, air permeability, and flexibility, required for nonwoven fabrics can be further enhanced.

The composition for a biodegradable melt-blown nonwoven fabric may comprise the PHA resin in an amount of 15% by weight or more based on the total weight of the composition for a biodegradable melt-blown nonwoven fabric. For example, the content of the PHA resin may be 20% by weight or more, 30% by weight or more, 35% by weight or more, 40% by weight or more, 50% by weight or more, 65% by weight or more, 70% by weight or more, 85% by weight or more, 90% by weight or more, 100% by weight, based on the total weight of the composition for a biodegradable melt-blown nonwoven fabric.

In addition, the composition for a biodegradable melt-blown nonwoven fabric may comprise the biodegradable resin in an amount of less than 90% by weight based on the total weight of the composition for a biodegradable melt-blown nonwoven fabric. For example, the content of the biodegradable resin may be 85% by weight or less, 80% by weight or less, 70% by weight or less, 60% by weight or less, 45% by weight or less, or 35% by weight or less. Specifically, the content of the biodegradable resin may be 35% by weight to 80% by weight, but it is not limited thereto.

According to still another embodiment of the present invention, the weight ratio of the PHA resin to the biodegradable resin may be 1:99 to 99: 1. For example, the weight ratio of the PHA resin to the biodegradable resin may be 5:95 to 99:5, 10:90 to 90: 10, 15:90 to 60:40, 5:95 to 45:55, 10:90 to 40:60, 15:85 to 35:65, or 20:80 to 30:70. As the weight ratio of the PHA resin and the biodegradable resin satisfies the above range, while biodegradability and processability are not deteriorated, it is possible to enhance the uniformity in the diameter of fibers produced under high-temperature and high-pressure conditions such as a melt-blown process, along with characteristics such as filterability, air permeability, flexibility, and the like.

Specifically, the biodegradable resin may be polylactic acid (PLA). More specifically, the weight ratio of the PHA resin and the PLA resin may be 10:90 to 70:30. For example, the weight ratio of the PHA resin and the PLA resin may be 10:90 to 45:55, 15:85 to 40:60, 15:85 to 35:65, or 20:80 to 30:70. As the weight ratio of the PHA and PLA resins satisfies the above range, while biodegradability and processability are not deteriorated, it is possible to further enhance the uniformity in the diameter of fibers produced under high-temperature and high-pressure conditions such as a melt-blown process, along with characteristics such as filterability, air permeability, flexibility, and the like.

According to still another embodiment of the present invention, the composition for a biodegradable melt-blown nonwoven fabric may further comprise at least one additive selected from the group consisting of pigments, dye absorbers, light absorbers, antioxidants, compatibilizers, weighting agents, nucleating agents, melt strength agents, slip agents, and fluidizing agent.

The pigment may comprise at least one selected from the group consisting of inorganic particles, carbon black, and cobalt green. The inorganic particles may be a metal such as Cu, a metal oxide, a metalloid oxide, or a combination thereof, but it is not limited thereto.

The pigment may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric.

The antioxidant is an additive for preventing decomposition by ozone or oxygen, preventing oxidation during storage, or preventing deterioration of physical properties. Common antioxidants may be used as long as the effects of the present invention are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the antioxidant satisfies the above range, the physical properties of a nonwoven fabric may be enhanced, and it may be more advantageous for achieving the desired effects of the present invention.

The compatibilizer is an additive for imparting compatibility by removing the releasability of the biodegradable resin and/or the PHA resin. Common compatibilizers may be used as long as the effects of the present invention are not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, maleic anhydrides, and glycerin stearate.

The compatibilizer may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the compatibilizer satisfies the above range, the physical properties may be enhanced by increasing the compatibility between the resins used, and it may be more advantageous for achieving the desired effects of the present invention.

The weighting agent is an inorganic material and an additive for increasing the moldability by increasing the crystallization rate during the molding process and for reducing the problem of cost increase due to the use of resins with higher biodegradability as compared with synthetic resins. Common inorganic materials may be used as long as the effects of the present invention are not impaired.

The weighting agent may comprise at least one selected from the group consisting of inorganic materials such as zinc and calcium, stearic acid, light or heavy calcium carbonate, silica, talc, kaolin, barium sulfate, clay, calcium oxide, magnesium hydroxide, titanium oxide, carbon black, and glass fibers.

The weighting agent may have an average particle size of 0.5 µm to 5 µm. For example, the average particle size of the weighting agent may be 0.5 µm to 4.8 µm, 0.5 µm to 4.5 µm, or 0.7 µm to 4 µm. If the average particle size of the weighting agent is less than 0.5 µm, it is difficult for the particles to be dispersed. If it exceeds 5 µm, the size of the particles becomes excessively large, which may impair the effects of the present invention.

The weighting agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the weighting agent satisfies the above range, it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out for a lack of crystallization during the process. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired. Specifically, the nucleating agent may comprise, for example, a metal compound comprising a single element substance (pure substance) or a composite oxide, a low molecular weight organic compound having a metal carboxylate group, a polymeric organic compound having a metal carboxylate group, a polymeric organic compound, phosphoric acid or phosphorous acid or a metal salt thereof, a sorbitol derivative, thioglycolic anhydride, and p-toluenesulfonic acid or a metal salt thereof, or the like. The nucleating agents may be used alone or in combination thereof.

The metal compound comprising a single element substance (pure substance) or a composite oxide may be at least one selected from the group consisting of, for example, carbon black, calcium carbonate, synthetic silicic acid and its salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, and metal salts of organic phosphorus, and boron nitride

The low molecular weight organic compound having a metal carboxylate group may be at least one selected from the group consisting of, for example, metal salts of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester.

The polymeric organic compound having a metal carboxylate group may be at least one selected from the group consisting of, for example, metal salts of carboxyl group-containing polyethylene obtained by an oxidation reaction of polyethylene, carboxyl group-containing polypropylene obtained by an oxidation reaction of polypropylene, a copolymer of acrylic acid or methacrylic acid with olefins (such as ethylene, propylene, and butene-1), a copolymer of acrylic acid or methacrylic acid with styrene, a copolymer of an olefin and maleic anhydride, and a copolymer of styrene and maleic anhydride.

The polymeric organic compound may be at least one selected from the group consisting of, for example, alpha-olefins branched to the carbon atom at position 3 and having 5 or more carbon atoms (such as 3,3-dimethylbutene-1,3-methylbutene-1,3-methylpentene-1,3-methylhexene-1 and 3,5,5-trimethylhexene-1), polymers of vinylcycloalkanes (such as vinylcyclopentane, vinylcyclohexane, and vinylnorbornane), polyalkylene glycols (such as polyethylene glycol and polypropylene glycol), poly(glycolic acid), cellulose, cellulose esters, and cellulose ethers.

The phosphoric acid or phosphorous acid or a metal salt thereof may be at least one selected from the group consisting of, for example, metal salts of diphenyl phosphate, diphenyl phosphite, bis(4-tert-butylphenyl)phosphate, and methylene bis-(2,4-tert-butylphenyl)phosphate. The sorbitol derivative may be, for example, bis(p-methylbenzylidene) sorbitol or bis(p-ethylbenzylidene) sorbitol.

The nucleating agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the nucleating agent satisfies the above range, the crystallization rate can be increased to enhance the processability, and it is possible to further enhance the productivity and moldability by enhancing the crystallization rate during, for example, the cutting step for producing pellets in the preparation process.

The melt strength agent is an additive for enhancing the melt strength of reactants. Common melt strength agents may be used as long as the effects of the present invention are not impaired.

Specifically, the melt strength agent may comprise at least one selected from the group consisting of polyesters, styrene-based polymers (such as acrylonitrile butadiene styrene and polystyrene), polysiloxanes, organomodified siloxane polymers, and maleic anhydride-grafted ethylene propylene diene monomer (MAH-g-EPDM).

The melt strength agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the melt strength agent satisfies the above range, it may be more advantageous for achieving the desired effects of the present invention.

The slip agent is an additive for enhancing the slip properties (slippery properties) during extrusion and for preventing fiber surfaces from sticking to each other. Specifically, common slip agents may be used as long as the effects of the present invention are not impaired. For example, the slip agent may be at least one selected from the group consisting of erucamide, oliamide, and stearamide.

The slip agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric. As the content of the slip agent satisfies the above range, the processability, productivity, and moldability may be further enhanced, and it may be more advantageous for achieving the desired effects of the present invention.

The composition for a biodegradable melt-blown nonwoven fabric may comprise a crosslinking agent and/or a stabilizer as additional additives.

The crosslinking agent is an additive for modifying the properties of the PHA resin and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric.

The stabilizer may be at least one selected from the group consisting of trimethyl phosphate, triphenyl phosphate, trimethyl phosphine, phosphoric acid, and phosphorous acid.

The stabilizer may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable melt-blown nonwoven fabric.

In the present specification, the additives may be in the form of monomers, polymers, or copolymers, but they are not limited thereto.

According to still another embodiment of the present invention, the composition for a biodegradable melt-blown nonwoven fabric may further comprise biomass.

As the composition for a biodegradable melt-blown nonwoven fabric comprises biomass, it is possible to enhance biodegradability, as well as to improve the soil. That is, the biomass has excellent biodegradability, is readily disrupted when undecomposed, improves fertilizer, and increases soil strength, thereby producing a soil improvement effect.

The biomass may be employed in an amount of 5 to 50% by weight based on the total weight of the composition for a biodegradable melt-blown nonwoven fabric. Specifically, the content of the biomass may be 10% by weight to 48% by weight, 15% by weight to 48% by weight, 20% by weight to 45% by weight, 20% by weight to 43% by weight, or 20% by weight to 40% by weight, based on the total weight of the composition for a biodegradable melt-blown nonwoven fabric. As the content of the biomass satisfies the above range, the biodegradability is further enhanced, a soil improvement effect is produced, and the crosslinking strength with the PHA resin is improved, whereby it is possible to effectively achieve the desired effects of the present invention.

The composition for a biodegradable melt-blown nonwoven fabric may have a melt flow index of 10 g/10 minutes to 30 g/10 minutes measured at 190°C and 2.16 kg according to ASTM D1238. For example, the melt flow index of the composition for a biodegradable melt-blown nonwoven fabric measured at 190°C and 2.16 kg according to ASTM D1238 may be 10 g/10 minutes to 25 g/10 minutes, 11 g/10 minutes to 20 g/10 minutes, or 12 g/10 minutes to 18 g/10 minutes.

In addition, the composition for a biodegradable melt-blown nonwoven fabric may have a melt flow index of 30 g/10 minutes or more measured at 210°C and 2.16 kg according to ASTM D1238. For example, the melt flow index of the composition for a biodegradable melt-blown nonwoven fabric measured at 210°C and 2.16 kg according to ASTM D1238 may be 45 g/10 minutes or more, 50 g/10 minutes or more, 53 g/10 minutes or more, 55 g/10 minutes or more, 59 g/10 minutes or more, 65 g/10 minutes or more, 80 g/10 minutes or more, 90 g/10 minutes or more, or 100 g/10 minutes or more.

The melt flow index measured for the composition for a biodegradable melt-blown nonwoven fabric according to ASTM D1238 may be measured for pellets prepared using the composition for a biodegradable melt-blown nonwoven fabric according to ASTM D1238.

Specifically, the melt flow index may be measured according to ASTM D1238 for biodegradable pellets prepared by feeding the composition for a biodegradable melt-blown nonwoven fabric into a twin-screw extruder, mixing, and melt-extruding it. More specifically, the biodegradable pellets may be prepared by setting the screw rotation speed of the twin-screw extruder to 200 rpm, mixing the composition for a biodegradable melt-blown nonwoven fabric while raising the internal temperature from 50°C to 170°C, melt-extruding it at a pressure of 12 bar and a temperature of 177°C, and using an under-water cutter system.

The composition for a biodegradable melt-blown nonwoven fabric may have a weight average molecular weight of 500,000 g/mole or less. For example, the weight average molecular weight of the composition for a biodegradable melt-blown nonwoven fabric may be 450,000 g/mole or less, 400,000 g/mole or less, or 350,000 g/mole or less.

The composition for a biodegradable melt-blown nonwoven fabric may have a weight average molecular weight of 500,000 g/mole or less. For example, the weight average molecular weight of the composition for a biodegradable melt-blown nonwoven fabric may be 450,000 g/mole or less, 400,000 g/mole or less, or 350,000 g/mole or less.

The composition for a biodegradable melt-blown nonwoven fabric may have a glass transition temperature (Tg) of -35°C to 15°C, -25°C to 5°C, -20°C to 1°C, -20°C to -5°C, or -20°C to -10°C, a melting temperature (Tm) of 105°C to 200°C, 106°C to 195°C, 110°C to 180°C, 130°C to 180°C, 150°C to 180°C, or 170°C to 180°C, and a crystallization temperature (Tc), which is not measured or 50°C to 120°C, 65°C to 100°C, or 75°C to 95°C, as measured by a differential scanning calorimeter (DSC).

In addition, the composition for a biodegradable melt-blown nonwoven fabric may have a decomposition temperature (Td, weight loss of 5%) of 220°C or higher, 230°C or higher, 240°C or higher, 250°C or higher, or 260°C or higher, 220°C to 300°C, 240°C to 300°C, 250°C to 300°C, or 260°C to 300°C, as measured by a thermogravimetric analyzer (TGA).

### Biodegradable melt-blown nonwoven fabric

The biodegradable melt-blown nonwoven fabric according to another embodiment of the present invention comprises biodegradable fibers, wherein the biodegradable fibers comprise a polyhydroxyalkanoate (PHA) resin comprising a 4-hydroxybutyrate (4-HB) repeat unit, and the biodegradable fibers have an average diameter of 10 µm or less and a standard deviation of the average diameter of 1.3 or less.

The biodegradable melt-blown nonwoven fabric may be prepared using the composition for a biodegradable melt-blown nonwoven fabric. Details on the PHA resin are as described above.

The biodegradable melt-blown nonwoven fabric may have a filter efficiency at 0.3 µm of 8% or more and a filter efficiency at 0.5 µm of 10% or more, according to KS K ISO 9073-152007.

For example, the biodegradable melt-blown nonwoven fabric may have a filter efficiency at 0.3 µm of 8% or more, 9% or more, 10% or more, 12% or more, 14% or more, 18% or more, 20% or more, 24% or more, 30% or more, 36% or more, 45% or more, 50% or more, or 57% or more, according to KS K ISO 9073-152007.

In addition, the biodegradable melt-blown nonwoven fabric may have a filter efficiency at 0.5 µm of 10% or more, 11% or more, 20% or more, 26% or more, 30% or more, 32% or more, 36% or more, 38% or more, 41% or more, 44% or more, 45% or more, 50% or more, 55% or more, 60% or more, 65% or more, 70% or more, according to KS K ISO 9073-152007.

The biodegradable melt-blown nonwoven fabric may have a total thickness of 0.05 mm to 20 mm. For example, the total thickness of the biodegradable melt-blown nonwoven fabric may be 0.06 mm to 20 mm, 0.08 mm to 15 mm, 0.1 mm to 10 mm, or 0.1 mm to 8 mm.

The biodegradable melt-blown nonwoven fabric may have a basis weight of 10 gsm to 500 gsm. For example, the basis weight of the biodegradable melt-blown nonwoven fabric may be 12 gsm to 450 gsm, 15 gsm to 400 gsm, 20 gsm to 350 gsm, 20 gsm to 250 gsm, or 25 gsm to 200 gsm.

In addition, the biodegradable melt-blown nonwoven fabric may have a warp strength of 30 N or more and a warp elongation of 10% or more, based on a basis weight of 120 gsm, according to K ISO 9073-3:1989. For example, the biodegradable melt-blown nonwoven fabric may have a warp strength of 33 N or more, 35 N or more, or 36 N or more and a warp elongation of 11% or more, 13% or more, 15% or more, 18% or more, or 20% or more, based on a basis weight of 120 gsm (thickness: 0.28 mm), according to K ISO 9073-3:1989.

The biodegradable melt-blown nonwoven fabric may have a warp strength of 20 N or more and a warp elongation of 4% or more, based on a basis weight of 60 gsm, according to K ISO 9073-3:1989. For example, the biodegradable melt-blown nonwoven fabric may have a warp strength of 21 N or more, 23 N or more, or 25 N or more and a warp elongation of 4.5% or more, 6% or more, 7% or more, or 8% or more, based on a basis weight of 60 gsm (thickness: 0.24 mm), according to K ISO 9073-3:1989.

The biodegradable melt-blown nonwoven fabric may have a warp strength of 3 N or more and a warp elongation of 6% or more, based on a basis weight of 30 gsm, according to K ISO 9073-3:1989. For example, the biodegradable melt-blown nonwoven fabric may have a warp strength of 3.5 N or more, 5 N or more, 6 N or more, 7 N or more, 8 N or more, or 9 N or more and a warp elongation of 6.5% or more, 7% or more, 8% or more, or 9% or more, based on a basis weight of 30 gsm (thickness: 0.12 mm), according to K ISO 9073-3:1989.

In addition, the biodegradable melt-blown nonwoven fabric may be an aggregate of biodegradable fibers.

Specifically, the biodegradable fibers may have an average diameter of 10 µm or less and a standard deviation of the average diameter of 1.3 or less. For example, the average diameter of the biodegradable fibers may be 8 µm or less, 6 µm or less, 5 µm or less, 4.5 µm or less, 4 µm or less, 3.5 µm or less, 2.5 µm or less, 2.3 µm or less, 2.2 µm or less, 2 µm or less, 1.9 µm or less, or 1.7 µm or less. The standard deviation of the average diameter may be 1.2 or less, 1.1 or less, 1 or less, 0.85 or less, or 0.6 or less.

In addition, the biodegradable fibers may have an elongation of 500% or less, 350% or less, 200% or less, 130% or less, 100% or less, 90% or less, 80% or less, or 75% or less.

According to another embodiment of the present invention, the biodegradable fiber may be a composite fiber of a heterogeneous cross-section or a composite fiber of two or more or three or more components.

The heterogeneous cross-section fiber may have a cross-section of a circle, ellipse, or polygon, but it is not limited thereto.

In addition, the biodegradable fiber may be a sheath-core type comprising a core part and a sheath part, a side-by-side type, a sea-islands type, or a segmented-pie type.

In the sheath-core type, the cross-section of the core part and that of the sheath part may be different from each other. For example, the cross-section of the core part may be circular, and the cross-section of the sheath part may be in the shape of a donut, but they are not limited thereto.

In addition, the biodegradable fiber may be a two-component composite fiber in which the sheath part and the core part each comprise a different single-component resin. It may be a three-component composite fiber in which the sheath part comprises a single-component resin, and the core part comprises an at least two-component resin, or the core part comprises a single-component resin, and the sheath part comprises an at least two-component resin. In addition, the biodegradable fiber may be a composite fiber in which the sheath part and the core part each comprise an at least two-component resin.

For example, the core part may comprise the PHA resin, and the sheath part may comprise a biodegradable resin. For example, the biodegradable resin may be at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

The weight ratio of the core part to the sheath part may be 5:95 to 95:5. For example, the weight ratio of the core part to the sheath part may be 5:95 to 85:15, 7:93 to 80:20, 10:90 to 75:25, or 10:90 to 70:30.

According to still another embodiment of the present invention, the biodegradable melt-blown nonwoven fabric may be electrostatically treated.

Electrostatic treatment is a method that can enhance the aggregatation ability by imparting static electricity to a nonwoven fabric. When the nonwoven fabric is subjected to electrostatic treatment, the fibers constituting the nonwoven fabric forcibly have electric charges therein, whereby the nonwoven fabric made of fibers having polarized charges can easily collect charged microparticles.

The electrostatic treatment process may be carried out using corona discharging, plasma charging, frictional charging, or water charging through high-pressure water droplets, but it is not limited thereto.

In addition, a charging agent may be further used in order to maximize the electrostatic effect, and the charging agent may be a hindered amine-based charging agent, but it is not limited thereto.

According to still another embodiment of the present invention, the biodegradable melt-blown nonwoven fabric may further comprise a functional coating layer on at least one side thereof.

For example, the functional coating layer may be a hard coating layer or an antibacterial coating layer, and an adhesive layer may be interposed between the functional coating layer and the biodegradable melt-blown nonwoven fabric.

In addition, at least one side of the biodegradable melt-blown nonwoven fabric may be surface-treated using ions or electricity. For example, the surface treatment may be carried out by ion coating, ion collecting, electrical coating, or voltage coating, but it is not limited thereto.

According to still another embodiment of the present invention, the biodegradable melt-blown nonwoven fabric may further comprise a biodegradable spun-bonded nonwoven fabric on at least one side thereof.

In addition, the biodegradable melt-blown nonwoven fabric may further comprise one or more additives selected from the group consisting of a deodorant, an antibacterial agent, an inorganic filler, and a lubricant.

The deodorant may be, for example, at least one metal oxide selected from the group consisting of titanium dioxide (TiO₂), zinc oxide (ZnO), tin oxide (SnO₂), zirconium dioxide (ZrO), and strontium titanate (SrTiO₃), but it is not limited thereto.

The deodorant may be employed in an amount of 0.01 to 20% by weight based on the total weight of the biodegradable melt-blown nonwoven fabric. For example, the deodorant may be employed in an amount of 0.01 to 20% by weight, 0.05% by weight to 15% by weight, or 0.1% by weight to 10% by weight, based on the total weight of the biodegradable melt-blown nonwoven fabric.

The antimicrobial agent may be at least one selected from the group consisting of nano-silver, nano-copper, nano-zinc, and zeolite-based antimicrobial agents, but it is not limited thereto.

The antimicrobial agent may be employed in an amount of 0.01 to 20% by weight based on the total weight of the biodegradable melt-blown nonwoven fabric. For example, the antimicrobial agent may be employed in an amount of 0.01 to 20% by weight, 0.05% by weight to 15% by weight, or 0.1% by weight to 10% by weight, based on the total weight of the biodegradable melt-blown nonwoven fabric.

The inorganic filler may comprise at least one selected from the group consisting of talc, barium oxide, calcium carbonate, magnesium carbonate, zinc carbonate, zinc oxide, magnesium oxide, alumina, and silica, but it is not limited thereto.

The inorganic filler may have an average particle diameter of 0.01 µm to 2.0 µm. For example, the average particle diameter of the inorganic filler may be 0.01 µm to 2.0 µm, 0.05 µm to 2.0 µm, or 0.05 µm to 1.5 µm.

The inorganic filler may be employed in an amount of 0.01 to 20% by weight based on the total weight of the biodegradable melt-blown nonwoven fabric. For example, the inorganic filler may be employed in an amount of 0.01 to 20% by weight, 0.05% by weight to 15% by weight, or 0.1% by weight to 10% by weight, based on the total weight of the biodegradable melt-blown nonwoven fabric.

The lubricant may be a fatty acid ester, specifically a glycerin fatty acid ester, a sorbitan fatty acid ester, a pyridoxine fatty acid ester, or a mixture of at least one selected therefrom, but it is not limited thereto.

The lubricant may be employed in an amount of 0.01 to 20% by weight based on the total weight of the composition for a biodegradable melt-blown nonwoven fabric. For example, the lubricant may be employed in an amount of 0.01 to 20% by weight, 0.05% by weight to 15% by weight, or 0.1% by weight to 10% by weight, based on the total weight of the biodegradable melt-blown nonwoven fabric.

### Process for preparing a biodegradable melt-blown nonwoven fabric

The process for preparing a biodegradable melt-blown nonwoven fabric according to still another embodiment of the present invention comprises melt-extruding a composition for a biodegradable melt-blown nonwoven fabric or pellets prepared therefrom, followed by spinning thereof, wherein the composition for a biodegradable melt-blown nonwoven fabric comprises a polyhydroxyalkanoate (PHA) resin comprising a 4-hydroxybutyrate (4-HB) repeat unit, and the melt flow index (MFI) measured at 210°C and 2.16 kg according to ASTM D1238 is 30 g/10 minutes or more.

Details on the composition for a biodegradable melt-blown nonwoven fabric are as described above.

Specifically, in the process for preparing a biodegradable melt-blown nonwoven fabric according to still another embodiment of the present invention, the composition for a biodegradable melt-blown nonwoven fabric may be directly fed to a device and spun, or pellets prepared by melt-extrusion of the composition for a biodegradable melt-blown nonwoven fabric are fed to a device and spun, to thereby prepare a biodegradable melt-blown nonwoven fabric.

According to still another embodiment of the present invention, the composition for a biodegradable melt-blown nonwoven fabric may be melt-extruded and melt-spun at 150°C to 230°C to prepare a biodegradable melt-blown nonwoven fabric. For example, the temperature for melt-extrusion and melt-spinning may be 160°C to 225°C, 180°C to 220°C, or 195°C to 215°C.

In such an event, a conventional melt-spinning apparatus may be used without limitation. For example, it may be carried out using a melt-blown melt-spinning apparatus based on a single-screw extruder, but it is not limited thereto.

In addition, the melt-blown melt-spinning apparatus may comprise a melting section, a nozzle section comprising a filter, a draft section between the nozzle holes and the winding roller, and a winding section. The melting temperature, the diameter of the nozzle holes, the length of the nozzle holes, the ratio of the length to the diameter of the nozzle holes, the size of the nozzle inner filter, the discharged amount through the nozzle, the length of the draft section, the spinning speed, the cooling temperature, the winding speed of the melt-blown melt-spinning apparatus may be controlled to prepare a biodegradable melt-blown nonwoven fabric having desired physical properties.

In addition, the spinning step may be carried out such that the basis weight of the prepared biodegradable melt-blown nonwoven fabric is adjusted to 10 gsm to 500 gsm. For example, the spinning step may be carried out such that the basis weight of the prepared biodegradable melt-blown nonwoven fabric is adjusted to 12 gsm to 450 gsm, 15 gsm to 400 gsm, 20 gsm to 350 gsm, 20 gsm to 250 gsm, 25 gsm to 200 gsm, 25 gsm to 150 gsm, 25 gsm to 100 gsm, or 25 gsm to 50 gsm.

According to still another embodiment of the present invention, pellets prepared by melt-extruding the composition for biodegradable melt-blown nonwoven fabric at a pressure of 6 bar to 30 bar and a temperature of 150°C to 200°C may be melt-spun at 150°C to 230°C to prepare a biodegradable melt-blown nonwoven fabric.

For example, the composition for a biodegradable melt-blown nonwoven fabric may be melt-extruded at a pressure of 7 bar to 28 bar or 8 bar to 26 bar and a temperature of 155°C to 190°C or 165°C to 185°C, cooled to 15°C or lower, 10°C or lower, or 6°C or lower, and cut to prepare pellets. These pellets may be melt-spun at 160°C to 225°C, 180°C to 220°C, or 195°C to 215°C, to prepare a biodegradable melt-blown nonwoven fabric.

In addition, prior to the step of melt-spinning pellets, a step of drying the pellets at 40°C to 58°C or 42°C to 60°C for 11 hours or longer or 12 hours or longer may be further carried out.

The drying step may be carried out until the resin moisture content of the pellets is 2,000 ppm or less, 1,500 ppm or less, 1,100 ppm or less, 500 ppm or less, 300 ppm or less, 150 ppm or less, 100 ppm or less, 60 ppm or less, or 50 ppm or less, and it may be carried out by hot air drying or dehumidification drying, but it is not limited thereto.

According to still another embodiment of the present invention, the step of spinning a composition for a biodegradable melt-blown nonwoven fabric may be carried out using a composite spinning apparatus. For example, the composite spinning apparatus may be a sheath-core composite spinning apparatus.

Specifically, the composition for a biodegradable melt-blown nonwoven fabric may be directly fed to the core part or the sheath part of the sheath-core composite spinning apparatus to prepare a composition for a biodegradable melt-blown nonwoven fabric.

More specifically, the composition for a biodegradable melt-blown nonwoven fabric may be fed to the core part or the sheath part, and a biodegradable resin comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the core part or the sheath part.

For example, the composition for a biodegradable melt-blown nonwoven fabric may be fed to the core part, and a biodegradable resin comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the sheath part.

In addition, the weight ratio of the raw materials fed to the core part to the sheath part may be 5:95 to 95:5, 5:95 to 85:15, 7:93 to 80:20, 10:90 to 75:25, or 10:90 to 70:30.

### Mode for the Invention

Hereinafter, the present invention will be described in more detail with reference to the following examples. But the following Examples are intended to illustrate the present invention, and the scope of the Examples is not limited thereto only.

### [Example]

### Preparation of a biodegradable melt-blown nonwoven fabric

### Example 1

30% by weight of a polyhydroxyalkanoate (PHA) resin (3-HB-co-4-HB, manufacturer: CJ) composed of a first PHA resin (aPHA, 4-hydroxybutyrate (4-HB) content: 33% by weight, weight average molecular weight (Mw): 600,000 g/mole, melt flow index at 165°C and 5 kg according to ASTM D1238: 5.5 g/10 minutes) and 70% by weight of a polylactic acid (PLA) were mixed, followed by the addition thereto of 1 phr of a polyvinyl acetate (PVAc, manufacturer: Wacker) to prepare a composition for a biodegradable melt-blown nonwoven fabric. Here, phr (per hundred resin) refers to a unit of input amount of a material added per 100 parts by weight of a polymer (1 phr: 1 g input amount when the polymer is 100 g).

The composition for a biodegradable melt-blown nonwoven fabric was melt-extruded and then spun through a nozzle to prepare a biodegradable melt-blown nonwoven fabric (basis weight: 30 gsm), followed by electrostatic treatment thereof. In such an event, the specific process conditions were as follows.
- Temperature for melting and spinning: 210°C
- Nozzle: Ψ 0.25, 21 holes, 5 mm (hole spacing)
- Discharge rate: 6 ml/minute
- Process air flow rate: 1,000 L/minute
- Process air temperature: 260°C
- DCD (nozzle-collector distance): 250 mm
- Belt moving speed (take-up speed): 2.3 m/minute

### Examples 2 to 15, and Comparative Examples 1 and 2

Biodegradable melt-blown nonwoven fabrics were each prepared in the same manner as in Example 1, except that the components and process conditions were changed as shown in Table 1 below. Here, a polyhydroxyalkanoate (PHA) resin (3-HB-co-4-HB, manufacturer: CJ) composed of a second PHA resin (scPHA, 4-hydroxybutyrate (4-HB) content: 6% by weight, weight average molecular weight (Mw): 410,000 g/mole, melt flow index at 165°C and 5 kg according to ASTM D1238: 2.88 g/10 minutes) was used in Examples 6, 7, and 12.

**[Table 1]**

| | PHA (% by weight) | | PLA (% by weight) | PVAc (phr) | Glycerin stearate (phr) | Cu inorganic particles (phr) | Electrostatic treatment | Basis weight of nonwoven fabric (gsm) |
|---|---|---|---|---|---|---|---|---|
| | aPHA | scPHA | | | | | | |
| Ex. 1 | 30 | - | 70 | 1 | - | - | ○ | 30 |
| Ex. 2 | 30 | - | 70 | 1 | - | - | × | 30 |
| Ex. 3 | 20 | - | 80 | 1 | - | - | ○ | 30 |
| Ex. 4 | 20 | - | 80 | 1 | - | - | ○ | 40 |
| Ex. 5 | 20 | - | 80 | 1 | - | - | ○ | 50 |
| Ex. 6 | - | 30 | 70 | 1 | - | - | ○ | 30 |
| Ex. 7 | - | 30 | 70 | 1 | - | - | × | 30 |
| Ex. 8 | 30 | - | 70 | 1 | - | 3 | ○ | 30 |
| Ex. 9 | 30 | - | 70 | 1 | - | 3 | × | 30 |
| Ex. 10 | 30 | - | 70 | 1 | - | - | × | 30 |
| Ex. 11 | 40 | - | 60 | 1 | - | - | × | 30 |
| Ex. 12 | 35 | 30 | 35 | 1 | - | - | × | 30 |
| Ex. 13 | 30 | - | 70 | 1 | 2 | - | × | 120 |
| Ex. 14 | 30 | - | 70 | 1 | 2 | - | × | 60 |
| Ex. 15 | 30 | - | 70 | 1 | 2 | - | × | 30 |
| C. Ex. 1 | - | - | 100 | - | - | - | ○ | 30 |
| C. Ex. 2 | - | - | 100 | - | - | - | × | 30 |

### [Test Example]

### Test Example 1: Melt flow index

The compositions for a biodegradable melt-blown nonwoven fabric prepared in Examples 8, 10 to 12, and 14 were each measured for the melt flow index (g/10 minutes) at 190°C and 2.16 kg or 210°C and 2.16 kg according to ASTM D1238.

Specifically, the melt flow index was measured according to ASTM D1238 for biodegradable pellets prepared by feeding the composition for a biodegradable melt-blown nonwoven fabric into a twin-screw extruder, mixing, and melt-extruding it.

### Test Example 2: Tg and Tm

The compositions for a biodegradable melt-blown nonwoven fabric prepared in Examples 8, 10 to 12, and 14 were each measured for the glass transition temperature (Tg) and melting temperature (Tm) using differential scanning calorimetry (DSC).

Specifically, 5 mg to 20 mg of each of the compositions for a biodegradable melt-blown nonwoven fabric was placed in an aluminum pan, and the temperature was raised from 40°C to 180°C at a rate of 10°C/minute using a differential scanning calorimeter, followed by cooling thereof to -50°C at a rate of 10°C/minute to obtain a heat flow curve, from which the glass transition temperature (Tg) and the melting temperature (Tm) were measured.

### Test Example 3: Td

The compositions for a biodegradable melt-blown nonwoven fabric prepared in Examples 8, 10 to 12, and 14 were each measured for the decomposition temperature (Td) using a thermogravimetric analyzer (TGA).

Specifically, the decomposition temperature (Td) was measured as a temperature at which the weight of each of the compositions for a biodegradable fiber was reduced by 5% from a weight change curve obtained by raising the temperature from room temperature to 600°C at a rate of 10°C/minute using a thermogravimetric analyzer (TGA).

**[Table 2]**

| | Melt flow index (g/10 minutes, 190°C, 2.16 kg) | Melt flow index (g/10 minutes, 210°C, 2.16 kg) | Tg (°C) | Tm (°C) | Td (°C) |
|---|---|---|---|---|---|
| Example 8 | 16 | 66 | -14 | 173 | 276 |
| Example 10 | 16 | 67 | -19 | 173 | 264 |
| Example 11 | 13 | 59 | -18 | 172 | 292 |
| Example 12 | 12 | 105 | -13 | 172 | 293 |
| Example 14 | 32 | 110 | -18 | 170 | 273 |

### Test Example 4: Diameter and standard deviation of biodegradable fibers

The biodegradable melt-blown nonwoven fabrics prepared in Examples 1 to 15 and Comparative Examples 1 and 2 were each measured for the diameter of the fibers constituting the biodegradable melt-blown nonwoven fabrics using scanning electron microscopy (SEM), and the standard deviation thereof was calculated.

### Test Example 5: Filter efficiency of a biodegradable melt-blown nonwoven fabric

The biodegradable melt-blown nonwoven fabrics prepared in Examples 1 to 15 and Comparative Examples 1 and 2 were each measured for the filter efficiency at 0.3 µm and 0.5 µm under the condition of an area of 38 cm² and a pressure of 200 Pa according to KS K ISO 9073-152007. Specifically, particles having an average particle diameter of 0.3 µm and 0.5 µm were sprayed onto the nonwoven fabric to measure the filter efficiency.

**[Table 3]**

| | Biodegradable fiber | | Nonwoven fabric | |
|---|---|---|---|---|
| | Avg. value of diameters (µm) | Std. deviation of diameters | Filter efficiency at 0.3 µm (%) | Filter efficiency at 0.5 µm (%) |
| Ex. 1 | 1.7 | 0.81 | 29.0 | 45.0 |
| Ex. 2 | | | 21.0 | 32.0 |
| Ex. 3 | 2.3 | 1.2 | 30.0 | 41.0 |
| Ex. 4 | | | 46.6 | 62.9 |
| Ex. 5 | | | 57.7 | 73.4 |
| Ex. 6 | 1.9 | 0.59 | 32.0 | 44.0 |
| Ex. 7 | | | 24.2 | 36.5 |
| Ex. 8 | 2.2 | 0.99 | 29.0 | 45.0 |
| Ex. 9 | | | 24.0 | 38.0 |
| Ex. 10 | 3.9 | 0.43 | 9.6 | 11.7 |
| Ex. 11 | 3.3 | 0.48 | 14.0 | 20.1 |
| Ex. 12 | 18.0 | 0.52 | 8.8 | 11.0 |
| Ex. 13 | 2.2 | 0.44 | 39.6 | 60.7 |
| Ex. 14 | 1.9 | 0.80 | 57.2 | 77.1 |
| Ex. 15 | 1.8 | 0.63 | 19.7 | 29.2 |
| C. Ex. 1 | 2.3 | 1.0 | 82.0 | 90.0 |
| C. Ex. 2 | | | 19.0 | 27.0 |

As shown in Table 3 above, the biodegradable melt-blown nonwoven fabrics of Examples 1 to 15 had an average diameter of the fibers constituting the same and a standard deviation thereof in desired ranges, and the filter efficiency of the nonwoven fabrics was also excellent.

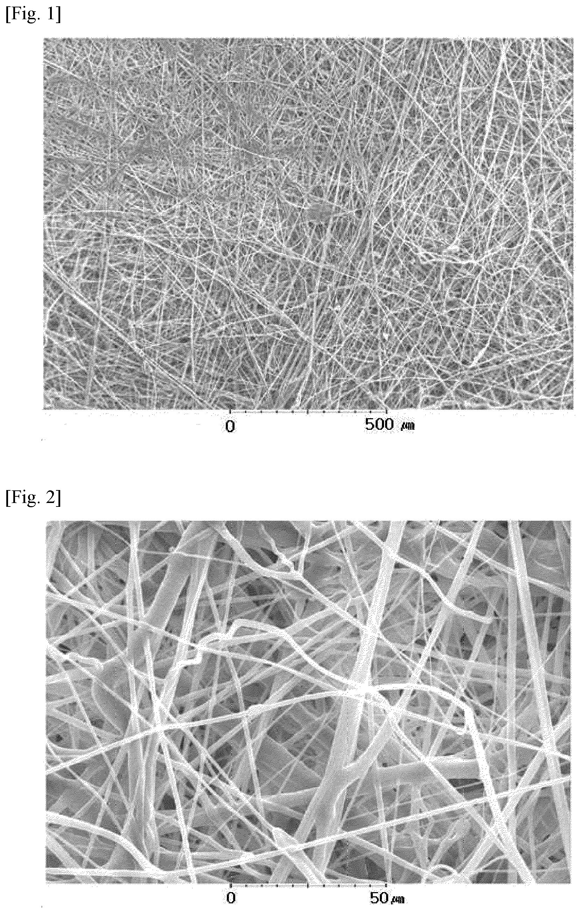

Fig. 1 is a scanning electron microscope (SEM, 100 magnification) image of the biodegradable melt-blown nonwoven fabric of Example 14. Fig. 2 is a scanning electron microscope (SEM, 1,000 magnification) image of the biodegradable melt-blown nonwoven fabric of Example 14.

As shown in Figs. 1 and 2, the biodegradable melt-blown nonwoven fabric of Example 14 had excellent uniformity of the diameter of the fibers constituting it.

## Claims

1. A composition for a biodegradable melt-blown nonwoven fabric, which comprises a polyhydroxyalkanoate (PHA) resin comprising a 4-hydroxybutyrate (4-HB) repeat unit, wherein the melt flow index (MFI) measured at 210°C and 2.16 kg according to ASTM D1238 is 30 g/10 minutes or more.

2. The composition for a biodegradable melt-blown nonwoven fabric of claim 1, wherein the PHA resin comprises the 4-hydroxybutyrate (4-HB) repeat unit in an amount of 0.1% by weight to 60% by weight.

3. The composition for a biodegradable melt-blown nonwoven fabric of claim 1, wherein the PHA resin comprises a first PHA resin, and the first PHA resin comprises a 4-hydroxybutyrate (4-HB) repeat unit in an amount of 15% by weight to 60% by weight and has a melt flow index (MFI) of 0.1 g/10 minutes to 20 g/10 minutes when measured at 165°C and 5 kg according to ASTM D1238.

4. The composition for a biodegradable melt-blown nonwoven fabric of claim 1, wherein the PHA resin comprises a second PHA resin, and the second PHA resin comprises a 4-hydroxybutyrate (4-HB) repeat unit in an amount of 0.1% by weight to 30% by weight and has a melt flow index of 0.1 g/10 minutes to 15 g/10 minutes when measured at 165°C and 5 kg according to ASTM D1238.

5. The composition for a biodegradable melt-blown nonwoven fabric of claim 1, wherein the composition for a biodegradable melt-blown nonwoven fabric comprises at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

6. The composition for a biodegradable melt-blown nonwoven fabric of claim 5, wherein the weight ratio of the PHA resin to the biodegradable resin is 1:99 to 99:1.

7. The composition for a biodegradable melt-blown nonwoven fabric of claim 5, wherein the weight ratio of the PHA resin to the polylactic acid (PLA) resin is 20:80 to 70:30.

8. The composition for a biodegradable melt-blown nonwoven fabric of claim 1, wherein the composition for a biodegradable melt-blown nonwoven fabric comprises at least one additive selected from the group consisting of pigments, dye absorbers, light absorbers, antioxidants, compatibilizers, weighting agents, nucleating agents, melt strength agents, slip agents, and fluidizing agent.

9. The composition for a biodegradable melt-blown nonwoven fabric of claim 1, wherein the PHA resin further comprises at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

10. The composition for a biodegradable melt-blown nonwoven fabric of claim 1, wherein the composition for a biodegradable melt-blown nonwoven fabric has a melt flow index of 10 g/10 minutes to 30 g/10 minutes measured at 190°C and 2.16 kg according to ASTM D1238 and a weight average molecular weight of 500,000 g/mole or less.

11. A biodegradable melt-blown nonwoven fabric, which comprises biodegradable fibers, wherein the biodegradable fibers comprise a polyhydroxyalkanoate (PHA) resin comprising a 4-hydroxybutyrate (4-HB) repeat unit, and the biodegradable fibers have an average diameter of 10 µm or less and a standard deviation of the average diameter of 1.3 or less.

12. The biodegradable melt-blown nonwoven fabric of claim 11, wherein the biodegradable melt-blown nonwoven fabric has a filter efficiency at 0.3 µm of 8% or more and a filter efficiency at 0.5 µm of 10% or more, according to KS K ISO 9073-152007, a total thickness of 0.05 mm to 20 mm, and a basis weight of 10 gsm to 500 gsm.

13. The biodegradable melt-blown nonwoven fabric of claim 11, wherein the biodegradable melt-blown nonwoven fabric has a warp strength of 3 N or more and a warp elongation of 6% or more, based on a basis weight of 30 gsm, according to K ISO 9073-3:1989.

14. The biodegradable melt-blown nonwoven fabric of claim 11, wherein the biodegradable fiber is a composite fiber of a heterogeneous cross-section or a composite fiber of two or more or three or more components.

15. The biodegradable melt-blown nonwoven fabric of claim 11, wherein the biodegradable melt-blown nonwoven fabric further comprises a functional coating layer on at least one side thereof.

16. A process for preparing a biodegradable melt-blown nonwoven fabric, which comprises:
melt-extruding a composition for a biodegradable melt-blown nonwoven fabric or pellets prepared therefrom, followed by spinning thereof,
wherein the composition for a biodegradable melt-blown nonwoven fabric comprises a polyhydroxyalkanoate (PHA) resin comprising a 4-hydroxybutyrate (4-HB) repeat unit, and the melt flow index (MFI) measured at 210°C and 2.16 kg according to ASTM D1238 is 30 g/10 minutes or more.

17. The process for preparing a biodegradable melt-blown nonwoven fabric of claim 16, wherein the melt-extrusion temperature is 150°C to 230°C.

18. The process for preparing a biodegradable melt-blown nonwoven fabric of claim 16, wherein the spinning step is carried out such that the basis weight of the biodegradable melt-blown nonwoven fabric thus prepared is adjusted to 10 gsm to 500 gsm.

19. The process for preparing a biodegradable melt-blown nonwoven fabric of claim 16, wherein the step of spinning a composition for a biodegradable melt-blown nonwoven fabric is carried out using a sheath-core composite spinning apparatus.

20. The process for preparing a biodegradable melt-blown nonwoven fabric of claim 19, wherein the weight ratio of raw materials to be fed to the core part and the sheath part is 5:95 to 95:5.

21. The process for preparing a biodegradable melt-blown nonwoven fabric of claim 19, wherein the composition for a biodegradable melt-blown nonwoven fabric is fed to the core part.
